(19) Europäisches Patentamt
European Patent Office
Office européen des brevets

(11) EP 2 353 800 B1

(12) EUROPÄISCHE PATENTSCHRIFT

(45) Veröffentlichungstag und Bekanntmachung des Hinweises auf die Patenterteilung:
**04.06.2014 Patentblatt 2014/23**

(51) Int Cl.:
***B25J 9/16*** *(2006.01)*

(21) Anmeldenummer: **11000439.7**

(22) Anmeldetag: **20.01.2011**

(54) **Verfahren und Vorrichtung zur Überwachung eines Manipulatorraumes**

Method and device for monitoring a manipulator area

Procédé et dispositif de surveillance d'une chambre de manipulateur

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.02.2010 DE 102010007027**
**05.02.2010 DE 102010007025**

(43) Veröffentlichungstag der Anmeldung:
**10.08.2011 Patentblatt 2011/32**

(73) Patentinhaber: **KUKA Laboratories GmbH**
**86165 Augsburg (DE)**

(72) Erfinder: **Kurth, Johannes Dr.**
**86163 Augsburg (DE)**

(74) Vertreter: **Schlotter, Alexander Carolus Paul et al**
**Wallinger Ricker Schlotter Tostmann**
**Patent- und Rechtsanwälte**
**Zweibrückenstrasse 5-7**
**80331 München (DE)**

(56) Entgegenhaltungen:
**EP-A1- 2 124 122          US-A1- 2005 216 126**
**US-A1- 2009 326 713**

• **SAKAGUCHI Y ET AL: "Building 3D map for localization using human action", INTELLIGENT ROBOTS AND SYSTEMS, 2004. (IROS 2004). PROCEEDINGS. 2004 I EEE/RSJ INTERNATIONAL CONFERENCE ON SENDAI, JAPAN 28 SEPT.-2 OCT., 2004, PISCATAWAY, NJ, USA,IEEE, PISCATAWAY, NJ, USA, Bd. 3, 28. September 2004 (2004-09-28), Seiten 3098-3103, XP010766905, DOI: 10.1109/IROS.2004.1389882 ISBN: 978-0-7803-8463-7**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren und eine Vorrichtung zur Überwachung auf Objekte innerhalb eines Manipulatorraumes eines mobilen Manipulators.

Um Beschädigungen von bei der Bahnplanung nicht vorgesehenen Objekten und insbesondere Verletzungen von Menschen durch Manipulatoren wie insbesondere Industrieroboter zu verhindern, ist es bislang üblich, den Arbeitsraum des Manipulators physisch abzusperren, beispielsweise durch ortsfeste Schutzzäune, Lichtschranken oder dergleichen, die den Zutritt zu einer Automatisierungszelle verhindern.

Eine solche Lösung ist jedoch aufwändig und unflexibel und damit für mobile Manipulatoren ungünstig, die gerade in unterschiedlichen Positionen in der Umgebung mit entsprechend wechselnden Arbeitsräumen operieren sollen.

Aus der DE 10 2007 007 576 B4 ist es daher bekannt, dreidimensionale Bilder eines Arbeitsraumes in einem ungestörten Soll-Zustand und einem aktuellen, zu überwachenden Ist-Zustand zu vergleichen. Weichen beide Bilder voneinander ab, kann auf ein unzulässiges Objekt geschlossen werden, welches eine Differenz zwischen beiden Bildern bewirkt.

Der Arbeitsraum wird dabei ortsfest, i.e. relativ zu der Umgebung definiert, in der der mobile Roboter sich bewegt, um Umgebungsrandbedingungen zu genügen, beispielsweise Überschneidungen mit Umgebungskonturen zu vermeiden, zulässige Schutzräume mit realen Zugängen, Bodenmarkierungen oder ähnlichem abzugleichen oder kooperierende Roboter zu berücksichtigen. Dementsprechend ist in der DE 10 2007 007 576 B4 eine ortsfeste Umgebungserfassungseinrichtung vorgesehen.

Die DE 10 2004 041 821 schlägt alternativ vor, einen Arbeitsraum eines portablen Roboters mittels Laserscanner, Ultraschall- und Mikrowellensensoren auf nicht vorgesehene Objekte zu überwachen. Die an dem portablen Roboter befestigten Scanner und Sensoren tasten einen Arbeitsraum ab, der sich somit mit dem portablen Roboter mitbewegt und manuell für einen neuen Arbeitsort angepasst wird.

Fährt ein mobiler Manipulator mit einer solchen manipulatorfesten Umgebungserfassungseinrichtung jedoch mit seiner beweglichen Basis erneut eine Position in der Umgebung an, für die vorab, beispielsweise beim Teachen, ein überwachter Raum vorgegeben wurde, führt eine, beispielsweise toleranz- oder navigationsfehlerbedingte, Abweichung zwischen der aktuellen Ist-Basisposition und der Ausgangs-Basisposition, für die der überwachte Raum vorgegeben wurde, dazu, dass der aktuell überwachte Raum, der aufgrund der an dem Manipulator befestigten Umgebungserfassungseinrichtung relativ zu dem Manipulator definiert ist, relativ zur Umgebung nicht mehr dem Raum entspricht, der auf Basis der Ausgangs-Basisposition vorgegeben wurde, sondern von diesem entsprechend des Basis-Positionsfehlers abweicht.

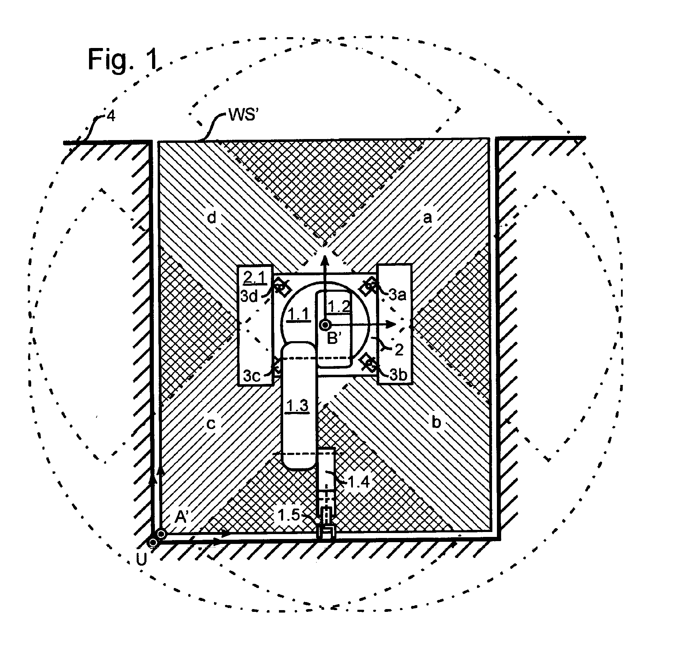

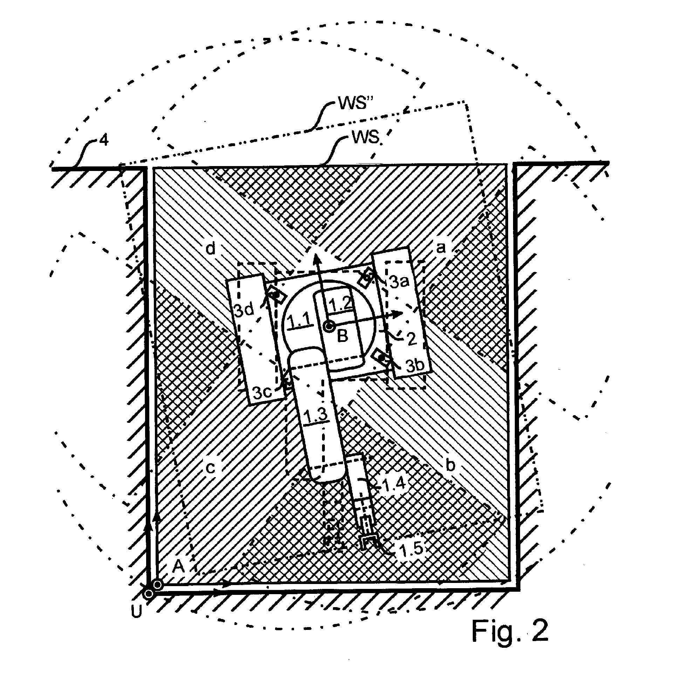

Dies ist in den nachfolgend noch näher erläuterten Fig. 1, 2 skizziert, in denen Fig. 1 einen mobilen Roboter in seiner Ausgangs-Basisposition zeigt, für die der schraffiert angedeutete überwachte Arbeitsraum WS' so vorgegeben wird, dass er innerhalb einer Umgebungskontur 4 liegt. Fährt der Roboter, wie in Fig. 2 dargestellt, die Basisposition erneut an, wobei seine Ist-Basisposition aufgrund von Navigationsfehlern, Regeltoleranzen und dergleichen gegenüber der in Fig. 2 strichliert angedeuteten Ausgangs-Basisposition verdreht und versetzt ist, würde der relativ zum Roboter vorgegebene und entsprechend mit verdrehte und versetzte überwachte Arbeitsraum WS", wie in Fig. 2 strich-doppelpunktiert angedeutet, die Umgebungskontur 4 schneiden und entsprechend zu einem unerwünschten Ansprechen der Überwachung führen.

Die US 2005/0216126 A1 betrifft einen autonomen Serviceroboter. Ziel ist es, Aufgaben zur Versorgung älterer Menschen, welche heute durch Krankenpfleger wahrgenommen werden, durch Roboter erledigen zu können. Dazu zählen insbesondere eine Überwachung des Gesundheitszustandes sowie bestimmte Pflegefunktionen. Dazu wird ein Roboter vorgeschlagen, welcher einen zylinderförmigen Körper aufweist sowie zwei große Antriebsräder und ein kleines Steuerrad. Der Roboter umfasst zwei Stereokameras sowie eine Leselampe. Außerdem weist der Roboter eine Ablage auf, auf welcher er für seinen Besitzer ein Objekt transportieren kann.

Die EP 2 124 122 A1 betrifft ein Verfahren zur Erzeugung einer Landkarte und einen mobilen Roboter. Ziel ist es, eine Landkarte für einen mobilen Roboter erzeugen zu können und dabei im Vergleich zu alternativen Methoden weniger Rechenzeit zu benötigen. Dazu wird vorgeschlagen, einen mobilen Roboter mit einem Feldsensor auszustatten, durch welchen eine Umgebung erfasst werden kann. Mit diesem Sensor werden neue Informationen aufgenommen. Eine neue Karte wird durch die Sensordaten und auf Basis einer alten, zuvor generierten, Landkarte erzeugt.

Die wissenschaftliche Publikation "Building 3D Map for Localization using Human Action", Sakaguchi et al, 2004 Proceedings oft the International Conference on Intelligent Robots and Systems, betrifft ein Verfahren zur Generierung einer dreidimensionalen Landkarte für einen Roboter, wobei menschliche Handlungen zur Erstellung der Karte verwendet werden. Ziel ist es, Nachteile von fest am Roboter angeordneten Kameras zu vermeiden sowie insbesondere Menschen detailtreuer abbilden zu können. Außerdem ist es beabsichtigt dynamische, bewegliche Objekte von statischen, unbeweglichen Objekten in der Umgebung des Roboters unterscheiden zu können.

Aufgabe der vorliegenden Erfindung ist es, die Überwachung eines Manipulatorraumes für einen mobilen Manipulator zu verbessern.

Diese Aufgabe wird durch ein Verfahren mit den Merkmalen des Anspruchs 1 bzw. 7 gelöst. Anspruch 8 stellt eine Vorrichtung, Anspruch 10 ein Computerprogrammprodukt, insbesondere ein Speichermedium oder einen Datenträger, zur Durchführung eines erfindungsgemäßen Verfahrens unter Schutz. Die Unteransprüche betreffen vorteilhafte Weiterbildungen.

Nach einem ersten Aspekt der vorliegenden Erfindung wird der überwachte Raum relativ zu einem mobilen Manipulator wenigstens teilautomatisiert in Abhängigkeit von einer erfassten Basisposition des Manipulators in seiner Umgebung vorgegeben. Diese kann gemäß einem zweiten Aspekt der vorliegenden Erfindung durch dieselbe Umgebungserfassungseinrichtung erfasst werden, die auch zum Überwachen des Raumes auf nicht vorgesehene Objekte verwendet wird. Beide Aspekte können vorteilhafterweise miteinander kombiniert sein.

Durch die Verwendung derselben Umgebungserfassungseinrichtung zur Raumüberwachung und Basispositionserfassung, die insbesondere auch zur Navigation der Manipulatorbasis verwendet werden kann, gemäß dem zweiten Aspekt kann nicht nur der apparative Aufwand reduziert, sondern vorteilhafterweise auch ein Transformationsfehler zwischen einer erfassten Basisposition und einem in Abhängigkeit von dieser vorgegebenem überwachten Raum reduziert oder vermieden werden.

Durch die wenigstens teilautomatisierte Vorgabe des überwachten Raumes relativ zu dem Manipulator in Abhängigkeit von seiner erfassten Basisposition gemäß dem ersten Aspekt können insbesondere die einleitend erläuterten Basis-Positionierungsfehler des mobilen Manipulators kompensiert werden. Unter einer wenigstens teilautomatisierten Vorgabe wird dabei eine automatische Vorgabe verstanden, die jedoch vorzugsweise auch manuelle Eingaben berücksichtigen kann.

Ein mobiler Manipulator weist allgemein eine bewegliche, insbesondere selbstbewegende, Basis bzw. Plattform auf, die, vorzugsweise ungebunden, zwei-oder dreidimensional in einer Umgebung positionierbar ist. Ihre ein-, zwei- oder dreidimensionale Lage, beschrieben beispielsweise durch kartesische Koordinaten in einem Weltkoordinatensystem, und/oder ihre ein-, zwei- oder dreidimensionale Orientierung, beschrieben zum Beispiel durch EULER- oder KARDAN-Winkel, wird vorliegend entsprechend als Basisposition in der Umgebung des Manipulators bezeichnet. Eine Basis kann beispielsweise rad-, raupen-, magnetisch oder durch Luftkissen getrieben sein. Gemäß einer bevorzugten Ausführung handelt es sich um einen autonomen Manipulator, dessen Basis sich, beispielsweise zielgesteuert, selbst einen Weg in, gegebenenfalls auch unbekannter, Umgebung sucht.

An der Basis ist eine Kinematik des Manipulators befestigt und relativ zu dieser beweglich. Sie kann beispielsweise einen, vorzugsweise wenigstens sechsachsigen, Teilmanipulator aufweisen, um ohne Umpositionierung der Basis ein Werkzeugreferenzsystem ("Tool Center point", TCP) beliebig in der Umgebung zu positionieren und so ein Arbeitsprogramm auszuführen. Vorzugsweise erfolgt die Überwachung des Raumes für eine ortsfeste, i.e. relativ zur Umgebung ruhende Basis.

Der überwachte Raum kann ein Arbeitsraum des Manipulators und hierzu insbesondere durch die Bewegungsmöglichkeiten der Kinematik definiert sein, die mechanisch maximal möglich oder durch ein Arbeitsprogramm vorgegeben sind. In dem überwachten Raum können zulässige Objekte vorgesehen sein, insbesondere Teile des Manipulators selber, aber auch Zu- und Abführeinrichtungen, Werkzeugschränke, zu bearbeitende Umgebungselemente und dergleichen. Erfasst die Umgebungserfassungseinrichtung andere als die vorgesehenen Objekte, wird eine entsprechende Reaktion ausgelöst, beispielsweise der Manipulator sicher stillgesetzt.

Alternativ oder zusätzlich kann der überwachte Raum einen Warnraum umfassen. Wird in diesem ein nicht vorgesehenes Objekte erfasst, kann beispielsweise eine Warnung ausgegeben und/oder die Geschwindigkeit des Manipulators reduziert werden. Während ein überwachter Arbeitsraum vorzugsweise sicherheitsgerichtet bzw. in sicherer Technik überwacht wird, kann ein Warnraum vorteilhafterweise auch nicht sicherheitsgerichtet überwacht werden.

Gleichermaßen kann der überwachte Raum auch einen Schutzraum umfassen, der für Bedienpersonen zulässig ist, wobei dann insbesondere Teile des Manipulators als nicht vorgesehene Objekte zu einer entsprechenden Reaktion wie einem Stillsetzen, einer Warnung oder einer Geschwindigkeitsreduktion führen.

Insbesondere, wenn die Umgebungserfassungseinrichtung, die vorzugsweise einen oder mehrere, vorzugsweise berührungslose, Abstandssensoren aufweist, beispielsweise Laserscanner, Ultraschall- oder Mikrowellensensoren, und/oder bildgebende und/oder -verarbeitende Einrichtungen, zum Beispiel CCD-Kameras, manipulatorfest angeordnet ist, wird der überwachte Raum direkt oder indirekt relativ zu dem Manipulator vorgegeben. Dabei wird vorliegend auch eine Vorgabe relativ zur Umgebungserfassungseinrichtung, beispielsweise einem Bezugssystem eines Sensors, verallgemeinernd als Vorgabe relativ zu dem Manipulator im Sinne der vorliegenden Erfindung bezeichnet. Insofern ist ein überwachter Raum im Sinne der vorliegenden Erfindung insbesondere stets dann relativ zu dem Manipulator vorgegeben, wenn eine Veränderung der Basisposition des Manipulators relativ zu seiner Umgebung eine entsprechende Veränderung des überwachten Raumes relativ zu dieser Umgebung bewirkt.

Auf der anderen Seite soll der überwachte Raum häufig Umgebungsrandbedingungen genügen. So soll beispielsweise eine Grenze des überwachten Raumes innerhalb eines freien Raumes der Umgebung verlaufen, ohne dass Umgebungskonturen in den überwachten Raum hineinragen und dort als nicht vorgesehene Objekte erfasst werden und zu einem unerwünschten Ansprechen der Überwachung führen.

Daher wird nach dem ersten Aspekt der vorliegenden Erfindung der überwachte Raum relativ zu einem mobilen Manipulator in Abhängigkeit von einer Basisposition des Manipulators in seiner erfassten Umgebung vorgegeben. Auf diese Weise kann der vorteilhafterweise relativ zum Manipulator vorgegebene Raum, der beispielsweise durch dessen Kinematik bestimmt ist, insbesondere an Fehlpositionierungen des Manipulators relativ zu seiner Umgebung angepasst werden.

Hierzu wird in einer bevorzugten Ausführung der überwachte Raum vorab für eine Ausgangs-Basisposition des mobilen Manipulators vorgegeben, die beispielsweise eine Basisposition sein kann, in der der überwachte Raum durch einen Anwender manuell oder wenigstens teilautomatisiert vorgegeben wird. Gleichermaßen kann es sich auch um eine in einem vorhergehenden Bewegungszyklus eingenommene Basisposition handeln, an die der überwachte Raum angepasst wurde.

Dann wird, vorzugsweise im Betrieb, eine Ist-Basisposition des mobilen Manipulators erfasst. Eine Basisposition kann allgemein beispielsweise in einer bekannten Umgebung erfasst werden, indem etwa Abstände zu bekannten Umgebungskonturen oder Referenzmarken ermittelt und damit eine Positionsbestimmung durchgeführt wird, oder durch Bilderkennung und -vergleich. Gleichermaßen kann eine Basisposition des mobilen Manipulators auch in einer unbekannten Umgebung unter gleichzeitiger Erfassung dieser Umgebung erfasst werden ("Simultaneous Localization and Mapping" SLAM).

Wenn die erfasste Ist- von der Ausgangs-Basisposition abweicht, vorzugsweise, wenn eine Differenz zwischen Ausgangs- und Ist-Basisposition einen vorgegebenen Grenzwert übersteigt, wird der relativ zum mobilen Manipulator vorgegebene Raum in Abhängigkeit von der erfassten Ist-Basisposition, insbesondere in Abhängigkeit von einer Differenz zwischen Ausgangs- und Ist-Basisposition, verändert. Eine Differenz zwischen Basispositionen kann beispielsweise ein Lageversatz und/oder eine Umorientierung umfassen. Dadurch kann eine Fehlpositionierung des Manipulators gegenüber seiner Ausgangs-Basisposition, für die der überwachte Raum unter Berücksichtigung von Umgebungsrandbedingungen vorgegeben wurde, kompensiert werden.

In einer bevorzugten Ausführung kann der Grenzwert für die Differenz zwischen Ausgangs- und Ist-Basisposition von dem vorgegebenen überwachten Manipulatorraum und/oder der Basisposition abhängen und beispielsweise bei Arbeitsräumen, die mit größeren Abständen zur Umgebung vorgegeben sind oder in Basispositionen, bei denen der Manipulator weiter von Umgebungskonturen entfernt ist, größer sein, da in diesem Fall auch bei geringfügiger Fehlpositionierung keine Kompensation erforderlich ist.

Der überwachte Raum kann relativ zu dem Manipulator derart verändert werden, dass er relativ zur Umgebung wenigstens im Wesentlichen dem für die Ausgangs-Basisposition vorgegeben überwachten Raum in Lage, Orientierung und/oder Größe entspricht. Insbesondere kann der für die Ausgangs-Basisposition vorgegebene Raum gemäß einer Relation auf einen kompensierten Raum für die Ist-Basisposition abgebildet werden, die sich aus der Transformation zwischen Ausgangs- und Ist-Basisposition ergibt. Er kann aber auch in anderer geeigneter Weise verändert, beispielsweise proportional zur Differenz zwischen ist- und Ausgangs-Basisposition verkleinert werden.

In einer bevorzugten Ausführung wird das Verfahren online während des Betriebs des Manipulators durchgeführt. Insbesondere kann nach Erreichen der Basisposition der dieser zugeordnete überwachte Raum vorgegeben werden. Vorzugsweise wird ein Arbeitsprogramm des Manipulators erst dann freigegeben bzw. gestartet, wenn dieser Raum vorgegeben wurde und sicher überwacht wird.

Auf diese Weise können für verschiedene Basispositionen des Manipulators in seiner Umgebung jeweils überwachte Räume vorgegeben werden. Eine Vorgabeeinrichtung, die in der Umgebungserfassungseinrichtung und/oder einer Manipulatorsteuerung implementiert oder separat ausgebildet sein kann, kann zu jeder erfassten Ist-Position einen abgespeicherten Raum, insbesondere dessen geometrische Grenzen und/oder als zulässig vorgesehene Objekte, abrufen und als überwachten Raum vorgeben.

Während bei den mobilen Manipulatoren, deren Basis sich auf vorgegebenen, insbesondere geteachten Wegen bewegt, einfach der zu einer erreichten Wegposition abgespeicherte überwachte Raum abgerufen werden kann, ist die Vorgabe des überwachten Raumes auf Basis der in, gegebenenfalls unbekannter, Umgebung erfassten Basisposition bei autonomen Manipulatoren besonders vorteilhaft. Dabei kann der Raum zum Beispiel für verschiedene Ausgangs-Basispositionen vorab durch einen Anwender oder automatisch, zum Beispiel durch eine Umgebungserfassung, vorgegeben und abgespeichert werden, wobei die Vorgabeeinrichtung des autonomen Manipulators dann im Betrieb die der erfassten Ist-Position nächstliegende(n) Ausgangs-Basisposition(en) auswählt und hieraus, zum Beispiel durch Mittelung oder eine Verschiebung proportional zur Differenz Ist- und Ausgangs-Basisposition, den überwachten Raum vorgibt.

Gleichermaßen kann eine Vorgabe des überwachten Raumes relativ zu dem Manipulator in Abhängigkeit von seiner Basisposition auch dadurch erfolgen, dass eine geometrische Grenze des überwachten Raumes wenigstens teilautomatisiert auf Basis einer erfassten Umgebung vorgegeben wird, wie dies in der parallelen deutschen Anmeldung derselben Anmelderin vom selben Anmeldetag wie die vorliegende Anmeldung mit demselben Titel ausführlich erläutert ist. Denn indem die geometrische Grenze des überwachten Raumes unmittelbar auf Basis der in der aktuellen Ist-Basisposition erfassten Umgebung vorgegeben wird, kann ebenfalls eine Fehlpositionierung der Basis in der Umgebung kompensiert und der überwachte Raum an Umgebungsrandbedingungen angepasst werden.

Nach einem dritten Aspekt der vorliegenden Erfindung wird im Wesentlichen vorgeschlagen, nicht den überwachten Raum an eine von einer Ausgangs-Basisposition abweichende Ist-Basisposition des Manipulators anzupassen, sondern umgekehrt die Ist-Basisposition des Manipulators zu verändern, i.e. den Manipulator mechanisch zu verfahren, wenn ein nicht vorgesehenes Objekt, insbesondere eine nicht vorgesehene Umgebungskontur, in dem überwachten Raum festgestellt wird.

Dieses Verfahren erfolgt vorzugsweise, bevor ein Arbeitsprogramm des Manipulators freigegeben bzw. gestartet wird. Vorzugsweise wird die Basisposition solange verändert, bis kein nicht vorgesehenes Objekt in dem überwachten Raum festgestellt wird. Erst dann wird ein Arbeitsprogramm freigegeben bzw. gestartet. Die Veränderung kann dabei gerichtet, beispielsweise von dem nicht vorgesehenen Objekt weg oder in einer bestimmten Umgebungsrichtung, und/oder gemäß einem vorgegebenen Bewegungsmuster erfolgen.

Der dritte Aspekt kann insbesondere mit dem zweiten, aber auch mit dem ersten Aspekt kombiniert sein, indem beispielsweise wahlweise oder iterativ abwechselnd die Basisposition und der überwachte Raum angepasst werden.

Weitere Vorteile und Merkmale ergeben sich aus den Unteransprüchen und den Ausführungsbeispielen. Hierzu zeigt, teilweise schematisiert:

Fig. 1: in der Draufsicht von oben einen mobilen Roboter mit einer Vorrichtung nach einer Ausführung der vorliegenden Erfindung in einer Ausgangs-Basisposition; und

Fig. 2: in Fig. 1 entsprechender Darstellung den Roboter in einer Ist-Basisposition.

Fig. 1 zeigt einen mobilen Roboter in Form eines sechsachsigen Knickarmroboters 1, dessen Karussell 1.2 um eine vertikale Achse drehbar an einem Grundgestell 1.1 befestigt ist. Am Karussell 1.2 ist eine Schwinge 1.3, an dieser ein Arm 1.4 um parallele horizontale Achsen drehbar angelenkt. Eine Zentralhand mit drei sich in einem Punkt schneidenden Drehachsen ist am Arm befestigt und trägt ein Werkzeug 1.5.

Das Grundgestell 1.1 ist auf einer mobilen Basis bzw. Plattform 2 festgelegt, die mittels zweier Raupen 2.1 ungebunden in der Umgebung selbstbewegend positioniert werden kann. Auf ihr sind vier Laserscanner 3.a bis 3d angeordnet, die eine Umgebungserfassungseinrichtung bilden. Strichpunktiert sind in Fig. 1, 2 von den Scannern 3a bis 3d maximal überwachbare Sektoren angedeutet. Die Scanner 3a bis 3d können beispielsweise in einer horizontalen Ebene, die in einer bevorzugten Ausführung etwa 20 cm über dem Boden liegt, zweidimensionale Sektoren überwachen oder in einer nicht dargestellten Abwandlung auch dreidimensionale Sektoren, zum Beispiel Kugelsektoren oder dergleichen, überwachen

In der in Fig. 1 gezeigten Ausgangs-Basisposition wird vorab als überwachter Manipulatorraum ein Arbeitsraum WS' = a ∩ b ∩ c ∩ d vorgegeben, beispielsweise durch Benutzereingabe oder wie in der parallelen deutschen Anmeldung derselben Anmelderin vom selben Anmeldetag wie die vorliegende Anmeldung mit demselben Titel ausführlich erläutert, auf deren Inhalt insofern ausdrücklich vollinhaltlich Bezug genommen wird.

Hierzu wird der Erfassungsbereich der vier Scanner 3a bis 3d auf die in Fig. 1 schraffierten Teilsektoren begrenzt, so dass außerhalb liegende Objekte nicht erfasst oder bei der Überwachung ignoriert werden. Die Teile des Roboters selber sind als zulässig vorgesehen, so dass ihre Erfassung durch die Scanner nicht zu einem Ansprechen der Überwachung führt.

Wie in Fig. 1 erkennbar, ist der Arbeitsraum WS' so vorgegeben, dass er knapp innerhalb der durch die Umgebungskontur 4 umgrenzten Nische liegt, in der der Roboter in seiner Ausgangs-Basisposition positioniert ist. Auf diese Weise wird einerseits verhindert, dass die Umgebungskontur 4 ungewollt von den Laserscannern als unzulässiges, nicht vorgesehenes Objekt erfasst wird. Auf der anderen Seite kann aufgrund des geringen Abstands zwischen Arbeitsraumgrenze und Umgebungskontur 4 insbesondere verhindert werden, dass eine Bedienperson von der Nischenöffnung aus in den Arbeitsbereich des Roboters eintritt und dort mit diesem kollidiert oder am Rand der Umgebungskontur 4 unbemerkt "gefangen" wird, wenn der Roboter in die Nische einfährt.

In gleicher Weise kann für weitere Ausgangs-Basispositionen (nicht dargestellt) jeweils ein entsprechender Arbeits- oder auch Schutzraum vorgegeben und abgespeichert werden.

In Fig. 2 hat der Roboter erneut seine geteachte Basis-Position eingenommen, nachdem er sich zwischenzeitlich aus der Nische entfernt hatte. Dabei ist seine aktuelle Ist-Basisposition (ausgezogen in Fig. 2) gegenüber der geteachten Ausgangs-Basisposition (strichliert in Fig. 2) aufgrund geringfügiger Navigationsfehler verdreht und versetzt (in Fig. 2 übertrieben dargestellt).

Durch die Laserscanner 3a bis 3d wird diese Ist-Basisposition des Roboters erfasst, indem beispielsweise erfasste Merkmale, insbesondere Kanten der Umgebungskontur 4, mit entsprechenden, in der geteachten Ausgangs-Basisposition abgespeicherten Merkmalen abgeglichen werden. Gleichermaßen kann beispielsweise auch ein SLAM-Verfahren verwendet werden, um gleichermaßen die Umgebung und die Position des Roboters in dieser zu erfassen.

Zunächst wird dann aus mehreren, für verschiedene Ausgangs-Basispositionen abgespeicherten überwachten Räumen der dieser erfassten Ist-Basisposition zugeordnete Arbeitsraum WS' ausgewählt.

Folgt der mobile Roboter dabei vorgegebenen Wegen in der Umgebung, kann dazu zum Beispiel der der hierzu geteachten Ausgangs-Basisposition zugeordnete, vorab abgespeicherte Arbeitsraum aus einem Speicher abgerufen werden. Sucht der Roboter hingegen autonom seinen Weg in der Umgebung, kann alternativ aus mehreren, für verschiedene Ausgangs-Basispositionen vorab vorgegebenen Arbeitsräumen beispielsweise derjenige ausgewählt werden, dessen Ausgangs-Basisposition der erfassten Ist-Basisposition am nächsten kommt. In diesem Fall kann der Versatz bzw. die Verdrehung gegenüber der Ausgangs-Basisposition entsprechend größer sein.

Da der Arbeitsraum durch die manipulatorfesten Scanner 3a bis 3d überwacht wird, ist dieser wenigstens indirekt relativ zur Basis 2 vorgegeben. Denn dies ist im Sinne der vorliegenden Erfindung auch dann der Fall, wenn der Arbeitsraum beispielsweise durch die einzelnen Teilsektoren a bis d definiert und insofern direkt relativ zu einem Bezugssystem der Scanner 3a bis 3d und somit nur indirekt relativ zur Basis 2 vorgegeben wird, an der die Scanner 3a bis 3d angeordnet sind.

Dementsprechend wäre auch der von den Scannern 3a bis 3d überwachte Raum WS" zusammen mit der Basis 2 verdreht und versetzt (strich-doppelpunktiert in Fig. 2). Dies würde zum einen dazu führen, dass links oben und rechts unten in Fig. 2 Teile der Umgebungskontur 4 in den Arbeitsraum WS" hineinragen und als nicht vorgesehene Objekte zu einem Ansprechend der Überwachung und so beispielsweise einem ungewollten sicheren Stillsetzen des Roboters führen.

Zum anderen würde sich rechts unten in Fig. 2 ein ungewollt großer Abstand zwischen der Grenze des Arbeitsraums WS" und der Umgebungskontur 4 ergeben, in dem eine Bedienperson beim Einfahren des Roboters in die Nische unerkannt "gefangen" werden könnte, ohne frühzeitig von der Überwachung erkannt zu werden.

Daher wird die erfasste Ist-Basisposition mit der Ausgangs-Basisposition (vgl. Fig. 1 bzw. strichliert in Fig. 2) verglichen. Lage und Orientierung der für die Ausgangs-Basisposition vorgegebenen überwachten Raumes werden dann entsprechend der Differenz zwischen Ausgangs- und erfasster Ist-Basisposition automatisch derart verändert, dass der Raum WS relativ zur Umgebung wieder dem für die Ausgangs-Basisposition vorgegeben überwachten Raum WS' entspricht, indem die Laserscanner 3a bis 3d entsprechend andere Teilsektoren überwachen.

In Fig. 1, 2 sind zur schematischen Erläuterung diverse Bezugssysteme angedeutet: ein umgebungsfestes Weltkoordinatensystem U, ein manipulatorbasisfestes Koordinatensystem B (Ist-Basisposition, Fig. 2) bzw. B' (Ausgangs-Basisposition, Fig. 1) sowie ein arbeitsraumfestes Koordinatensystem A bzw. A'.

Der relativ zum Roboter 1 vorgegebene Arbeitsraum WS kann im Ausführungsbeispiel durch einen Quader im arbeitsraumfesten Koordinatensystem A beschrieben werden, welches durch die Transformation $T_{AB}$ aus dem manipulatorbasisfesten Koordinatensystem B hervorgeht. Seine Position, i.e. Lage und Orientierung, relativ zur Umgebung kann hingegen durch die Transformation $T_{AU}$ beschrieben werden, die den Übergang vom Welt- in das arbeitsraumfeste Koordinatensystem vermittelt. Diese ergibt sich mit der durch die Transformation $T_{BU}$ beschriebenen Basisposition zu:

$$T_{AU} \quad = \quad T_{AB} \bullet T_{BU}$$

Weicht nun, wie in Fig. 2, die Ist-Basisposition von der Ausgangs-Basisposition ab ($T_{BU} \neq T_{B'U}$), kann das arbeitsraumfeste Koordinatensystem A und mit dem in ihm definierten Quader auch der Arbeitsraum WS durch eine entsprechende Änderung der Transformation $T_{AB}$, i.e. einer Änderung des überwachten Raumes relativ zum Roboter, wieder zur Deckung mit der Ausgangs-Konfiguration gebracht werden:

$$T_{AU} \quad = \quad T_{AB} \bullet T_{BU}$$

$$= \quad T_{A'U} = T_{A'B'} \bullet T_{B'U}$$

$$\Rightarrow \quad T_{AB}(T_{BU}, T_{A'B'}, T_{B'U}),$$

i.e. der Arbeitsraum WS bzw. das arbeitsraumfeste Koordinatensystems A relativ zum Roboter bzw. dem manipulatorbasisfesten Koordinatensystem B ($T_{AB}$) in Abhängigkeit von der durch die Scanner 3a bis 3d erfassten Ist-Basisposition des Manipulators in seiner Umgebung ($T_{BU}$), dem in der Ausgangs-Basisposition relativ zum Roboter vorgegebenen Arbeitsraum ($T_{A'B'}$) und der Ausgangs-Basisposition in der Umgebung ($T_{B'U}$) vorgegeben werden. Dabei dient die vorstehende Formulierung mit Transformationen lediglich der Erläuterung, während die Änderung des überwachten Raumes relativ zum Roboter auch in anderer Weise implementiert sein kann. So kann beispielsweise der Arbeitsraum entsprechend einer Differenz zwischen Ist- und Ausgangs-Basisposition verkleinert, verformt, verschoben und/oder verdreht werden. Gleichermaßen kann der überwachte Raum direkt im manipulatorbasisfesten Koordinatensystem B vorgegeben werden, so dass an die Stelle der Transformation eine entsprechende, beispielsweise parametrisierte Beschreibung des Arbeitsraumes WS im manipulatorbasisfesten Koordinatensystem B tritt.

Gemäß dem dritten Aspekt kann, ausgehend von der Ist-Basisposition in Fig. 2, die Basis 2 auch so lange mechanisch verfahren werden, bis der überwachte Raum nicht mehr von der Umgebungskontur 4 geschnitten wird. Hierzu kann die Basis 2 beispielsweise aufgrund der in der zunächst eingenommenen Ist-Basisposition (ausgezogen in Fig. 2) in Fig. 2 links oben und rechts unten im Arbeitsraum WS" erfassten nicht vorgegebenen Objekte (Umgebungskontur 4) um ihre Hochachse gedreht und/oder verfahren werden, bis der relativ zur Basis 2 unverändert vorgegebene überwachte Arbeitsraum WS" nicht mehr mit der Umgebungskontur 4 kollidiert.

Ein solches Vorgehen ist insbesondere für autonome Manipulatoren vorteilhaft, die somit sozusagen einen freien Arbeitsraum suchen können. Es kann auch mit dem zuvor beschriebenen ersten Aspekt kombiniert werden, indem beispielsweise iterativ zunächst die Basisposition in einem vorgegebenen Bereich verändert und anschließend der überwachte Raum angepasst wird.

Bezugszeichenliste

| | |
|---|---|
| 1.1 | Grundgestell |
| 1.2 | Karussell |
| 1.3 | Schwinge |
| 1.4 | Arm |
| 1.5 | Werkzeug |
| 2 | Basis |
| 2.1 | Raupe |
| 3a-3d | Laserscanner (Umgebungserfassungseinrichtung) |
| 4 | Umgebung(skontur) |

| | |
|---|---|
| a - d | von Laserscanner 3a - 3d erfasster Teilsektor des Arbeitsraums |
| WS | vorgegebener Arbeitsraum (Manipulatorraum) in Ist-Basisposition |
| WS' | vorgegebener Arbeitsraum in Ausgangs-Basisposition |
| WS" | unveränderter Arbeitsraum bei Abweichung Ist-, Ausgangs-Basisposition |

**Patentansprüche**

1. Verfahren zur Überwachung eines Manipulatorraumes (WS) eines mobilen Manipulators, insbesondere eines mobilen Roboters (1, 2), durch Überwachen des Raumes auf nicht vorgesehene Objekte mittels einer Umgebungserfassungseinrichtung (3a - 3d), **dadurch gekennzeichnet, dass** der überwachte Raum relativ zu dem Manipulator in Abhängigkeit von einer erfassten Basisposition ($T_{BU}$) des Manipulators in seiner Umgebung wenigstens teilautomatisiert vorgegeben wird.

2. Verfahren nach Anspruch 1, **dadurch gekennzeichnet, dass** der überwachte Raum (WS') vorab für eine Ausgangs-Basisposition ($T_{B'U}$) des mobilen Manipulators vorgegeben wird, eine Ist-Basisposition ($T_{BU}$) des mobilen Manipulators erfasst wird, und der überwachte Raum in Abhängigkeit von der erfassten Ist-Basisposition verändert wird ($T_{AB}(T_{BU}, T_{A'B'}, T_{B'U})$), wenn die Ist- von der Ausgangs-Basisposition abweicht.

3. Verfahren nach Anspruch 2, **dadurch gekennzeichnet, dass** der überwachte Raum (WS), insbesondere in Abhängigkeit von einer Differenz zwischen Ausgangs- und Ist-Basisposition, relativ zu dem Manipulator derart verändert wird, dass er relativ zur Umgebung wenigstens im Wesentlichen dem für die Ausgangs-Basisposition vorgegeben überwachten Raum (WS') entspricht ($T_{AU} = T_{A'U}$).

4. Verfahren nach einem der vorhergehenden Ansprüche, **dadurch gekennzeichnet, dass** eine Basisposition des mobilen Manipulators in seiner bekannten Umgebung erfasst wird; oder dass eine Basisposition des mobilen Manipulators in seiner Umgebung mittels gleichzeitiger Erfassung der Umgebung (SLAM) erfasst wird.

5. Verfahren nach einem der vorhergehenden Ansprüche, **dadurch gekennzeichnet, dass** der überwachte Raum während des Betriebs des Manipulators vorgegeben wird.

6. Verfahren nach einem der vorhergehenden Ansprüche, **dadurch gekennzeichnet, dass** die Umgebungserfassungseinrichtung (3a-3d) auch zur Erfassung einer Basisposition ($T_{BU}$) des Manipulators in seiner Umgebung verwendet wird.

7. Verfahren nach einem der vorhergehenden Ansprüche, **dadurch gekennzeichnet, dass** überwachte Räume für verschiedene Basispositionen des Manipulators in seiner Umgebung vorgegeben werden.

8. Verfahren zur Überwachung eines Manipulatorraumes (WS) eines mobilen Manipulators, insbesondere nach einem der vorhergehenden Ansprüche, durch Überwachen des Raumes auf nicht vorgesehene Objekte mittels einer Umgebungserfassungseinrichtung (3a - 3d), wobei eine Basisposition ($T_{BU}$) des Manipulators in seiner Umgebung wenigstens teilautomatisiert verändert wird, wenn in einer Ist-Basisposition ein nicht vorgesehenes Objekt im überwachten Raum erfasst wird, **dadurch gekennzeichnet, dass** die Basisposition solange verändert wird, bis kein nicht vorgesehenes Objekt in dem überwachten Raum festgestellt wird.

9. Vorrichtung zur Überwachung eines Manipulatorraumes (WS) eines mobilen Manipulators, insbesondere eines mobilen Roboters (1, 2), mit:

einer Umgebungserfassungseinrichtung (3a - 3d) zum Überwachen des Raumes auf nicht vorgesehene Objekte; und

einer Vorgabeeinrichtung zum Vorgegeben des überwachten Raumes relativ zu dem Manipulator in Abhängigkeit von einer Basisposition des Manipulators in seiner Umgebung;

**dadurch gekennzeichnet, dass**

die Umgebungserfassungseinrichtung und/oder die Vorgabeeinrichtung zur Durchführung eines Verfahrens nach einem der vorhergehenden Ansprüche eingerichtet ist.

10. Vorrichtung nach Anspruch 9, **dadurch gekennzeichnet, dass** die Umgebungserfassungseinrichtung manipulatorfest angeordnet ist.

11. Computerprogrammprodukt mit Programmcode, der auf einem maschinenlesbaren Träger gespeichert ist und ein Verfahren nach einem der vorhergehenden Ansprüche 1 bis 8 ausführt, wenn er in einer Vorrichtung nach Anspruch 9 oder 10 ausgeführt wird.

**Claims**

1. A method for monitoring a manipulator space (WS) of a mobile manipulator, in particular of a mobile robot (1, 2), by monitoring the space for non-expected objects by an environment determination means (3a - 3d),

**characterized in that**

the monitored space is predefined at least partly automated relatively to the manipulator depending on a determined basis position ($T_{BU}$) of the manipulator in its environment.

2. A method according to claim 1, **characterized in that** the monitored space (WS') is predefined in advance for an initial basis position ($T_{B'U}$) of the mobile manipulator, a current basis position ($T_{BU}$) of the mobile manipulator is determined, and the monitored space is altered depending on the detected current basis position ($T_{AB}$ ($T_{BU}$, $T_{A'B'}$, $T_{B'U}$)), if the current basis position deviates from the initial basis position.

3. A method according to claim 2, **characterized in that** the monitored space (WS), is altered relatively to the manipulator, in particular depending on a difference between initial basis position and current basis position, such that it corresponds relatively to the environment at least basically with the monitored space (WS') predefined for the initial basis position ($T_{AU} = T_{A'U}$).

4. A method according to one of the preceding claims, **characterized in that** a basis position of the mobile manipulator is determined in its known environment; or that a basis position of the mobile manipulator is determined in its environment by simultaneous determination of the environment (SLAM).

5. A method according to one of the preceding claims, **characterized in that** the monitored space is predefined during the operation of the manipulator.

6. A method according to one of the preceding claims, **characterized in that** the environment determination means (3a - 3d) is also used for determination of a basis position ($T_{BU}$) of the manipulator in its environment.

7. A method according to one of the preceding claims, **characterized in that** monitored spaces are predefined for different basis positions of the manipulator in its environment.

8. A method for monitoring a manipulator space (WS) of a mobile manipulator, in particular according to one of the preceding claims, by monitoring the space for non-expected objects using an environment determination means (3a - 3d), wherein a basis position ($T_{BU}$) of the manipulator in its environment is altered at least partly automated, if in a current basis position a non-expected object is determined in the monitored space, **characterized in that** the basis position is altered as long as no non-expected object is determined in the monitored space.

9. A device for monitoring a manipulator space (WS) of a mobile manipulator, in particular a mobile robot (1, 2), comprising:

an environment determination means (3a - 3d) for monitoring of the space for non-expected objects; and

a predefinition means for predefining the monitored spaced relatively to the manipulator depending on a basis position of the manipulator in its environment;

**characterized in that**

the environment determination means and/or the predefinition means are adjusted for realization of a method according to one of the preceding claims.

10. A device according to claim 9, **characterized in that**, the environment determination means is arranged manipulator-fixed.

11. A computer programmed product with program code that is stored on a machine-readable carrier and that realizes a method according to one of the preceding claims 1 to 8, if it is run in a device according to claim 9 or 10.

**Revendications**

1. Procédé de surveillance d'un espace de manipulateur (WS) d'un manipulateur mobile, en particulier d'un robot mobile (1, 2), par surveillance de l'espace à la recherche d'objets non prévus au moyen d'un dispositif de détection de zones environnantes (3a - 3d), **caractérisé en ce que** l'espace surveillé par rapport au manipulateur est prédéfini de façon au moins en partie automatisée en fonction d'une position de base ($T_{BU}$) détectée du manipulateur dans ses zones environnantes.

2. Procédé selon la revendication 1, **caractérisé en ce que** l'espace surveillé (WS') est préalablement prédéfini pour une position de base de départ ($T_{B'U}$) du manipulateur mobile, une position de base réelle ($T_{BU}$) du manipulateur mobile est détectée, et l'espace surveillé est modifié en fonction de la position de base réelle détectée ($T_{AB}$ ($T_{BU}$, $T_{A'B'}$, $T_{B'U}$)) lorsque la position de base réelle est différente de la position de base de départ.

3. Procédé selon la revendication 2, **caractérisé en ce que** l'espace surveillé (WS) est modifié, en particulier en fonction d'une différence entre la position de base de départ et la position de base réelle, par rapport au manipulateur, de telle manière qu'il correspond par rapport aux zones environnantes au moins sensiblement à l'espace (WS') surveillé prédéfini pour la position de base de départ ($T_{AU} = T_{AU'}$).

4. Procédé selon l'une quelconque des revendications précédentes, **caractérisé en ce qu'**une position de base du manipulateur mobile dans ses zones environnantes connues est détectée, ou **en ce qu'**une position de base du manipulateur mobile dans ses zones environnantes est détectée au moyen d'une détection simultanée des zones environnantes (SLAM).

5. Procédé selon l'une quelconque des revendications précédentes, **caractérisé en ce que** l'espace surveillé est prédéfini pendant le fonctionnement du manipulateur.

6. Procédé selon l'une quelconque des revendications précédentes, **caractérisé en ce que** le dispositif de détection de zones environnantes (3a - 3d) est également utilisé pour détecter une position de base ($T_{BU}$) du manipulateur dans ses zones environnantes.

7. Procédé selon l'une quelconque des revendications précédentes, **caractérisé en ce que** les espaces surveillés sont prédéfinis pour différentes positions de base du manipulateur dans ses zones environnantes.

8. Procédé de surveillance d'un espace de manipulateur (WS) d'un manipulateur mobile, en particulier selon l'une des revendications précédentes, par surveillance de l'espace à la recherche d'objets non prévus au moyen d'un dispositif de détection de zones environnantes (3a - 3d), une position de base ($T_{BU}$) du manipulateur dans ses zones environnantes étant modifiée au moins n partie de manière automatisée, lorsqu'un objet inattendu est détecté dans l'espace surveillé, **caractérisé en ce que** la position de base est modifiée tant qu'aucun objet inattendu n'est remarqué dans l'espace surveillé.

9. Dispositif de surveillance d'un espace de manipulateur (WS) d'un manipulateur mobile, en particulier d'un robot mobile (1, 2), pourvu :

   d'un dispositif de détection de zones environnantes (3a - 3d) destiné à surveiller l'espace à la recherche d'objets inattendus ; et d'un dispositif de définition destiné à prédéfinir l'espace surveillé par rapport au manipulateur en fonction d'une position de base du manipulateur dans ses zones environnantes ; **caractérisé en ce que** le dispositif de détection de zones environnantes et/ou le dispositif de définition sont conçus pour mettre en oeuvre un procédé selon l'une des revendications précédentes.

10. Dispositif selon la revendication 9, **caractérisé en ce que** le dispositif de détection de zones environnantes est monté fixe sur le manipulateur.

11. Produit-programme informatique à code de programme, lequel produit est mis en mémoire sur un support lisible par ordinateur et exécute un procédé selon l'une des revendications 1 à 8, lorsqu'il est mis en oeuvre dans un dispositif selon la revendication 9 ou 10.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007007576 B4
- DE 102004041821
- US 20050216126 A1
- EP 2124122 A1